# EUROPÄISCHE PATENTANMELDUNG

(11) **EP 1 139 093 A1**
(43) Veröffentlichungstag der Anmeldung: **04.10.2001**
(21) Anmeldenummer: 01104088.8
(22) Anmeldetag: 21.02.2001
(51) Int. Cl.: G01N 27/22, B60S 1/08, G01N 25/66

(54) **Kapazitiv arbeitender Sensor zur Detektion von Kondensation an Oberflächen mit hydrophiler Deckschicht**

(30) Priorität: 28.03.2000 DE 10015430
(71) Anmelder: Preh-Werke GmbH & Co. KG, 97616 Bad Neustadt a.d. Saale (DE)
(72) Erfinder: Schmitt, Hans-Michael, Dr., 97702 Münnerstadt (DE); Berthold, Gottfried, Dr., 72766 Reutlingen (DE); Bach, Jürgen, 97616 Bad Neustadt/Saale (DE)
(74) Vertreter: Dietrich, Barbara

(57) **Zusammenfassung**

Die Erfindung betrifft einen kapazitiv arbeitenden Sensor zur Detektion von Kondensation an Oberflächen.

Bekannte kapazitiv arbeitende Sensoren (1) zur Detektion von Kondensation an Oberflächen weisen über eine den Kondensator bildende Metallschicht eine Passivierungsschicht sowie eine die Betauung (8) fördernde Zusatzschicht auf. In dieser Zusatzschicht sind Kondensationskeime integriert, an denen die Betauung (8) beginnt. Nachteilig ist, daß diese Betauung (8) tröpfenartig an den Kondensationskeimen erfolgt, wodurch die Empfindlichkeit des Sensors (1) minimiert wird.

Demgegenüber wird die Oberfläche der Passivierungsschicht (6) hydrophil gemacht, wodurch eine Betauung (8) über die ganze Oberfläche der Passivierungsschicht (6) erfolgen und wahrgenommen werden kann.

## Beschreibung

Die Erfindung betrifft einen kapazitiv arbeitenden Sensor zur Detektion von Kondensation an Oberflächen nach dem Oberbegriff des Patentanspruchs 1.

Zur Detektion beginnenden Beschlages, beispielsweise auf einer KFZ Scheibe, werden Sensoren verwendet, durch die Kondensation an der Oberfläche der Scheibe ermittelt und durch Auswertung der vom Sensor erzeugten Signale weitere, den Beschlag abbauende Maßnahme bewirkt werden.

Einen solchen Sensor beschreibt die DE 197 080 53 A1. Der Sensor besteht dabei aus einer Trägerschicht, auf der eine Metallschicht als Interdigitalstruktur angebracht ist, die einen Kondensator bildet. Im Kondensator ist ein temperaturabhängiger Widerstand integriert, der gleichzeitig als Temperatursensor und als Heizsensor verwendet wird. Auf der Trägerschicht ist außer einer Passivierungsschicht eine die Betauung fördernde Zusatzschicht angebracht. In dieser Zusatzschicht sind Kondensationskeime integriert, d.h. Unregelmäßigkeiten, an denen die Betauung beginnt. Nachteilig ist, daß keine gleichmäßige Bildung eines die Betauung anzeigenden Wasserfilms erfolgt, sondern nur eine tröpfchenartige Betauung an den Kondensationskeimen, wodurch die Empfindlichkeit des Sensors minimiert ist.

Die Aufgabe der Erfindung besteht nun darin, einen Sensor der gattungsgemäßen Art aufzuzeigen, der eine höhere Empfindlichkeit besitzt.

Gelöst wird die Aufgabe durch die Merkmale des Patenanspruchs 1.

Der Erfindung liegt die Idee zu Grunde, anstelle einer Zusatzschicht mit Kondensationskeimen, die Oberfläche einer Passivierungsschicht über einem Interdigitalkondensator gezielt zu bearbeiten, um die Oberflächenenergie bzw. Oberflächenspannung heraufzusetzen. Dadurch können sich an jeder Stelle der Oberfläche Betauungsmoleküle bilden, die an jeder Stelle der Oberfläche eine Veränderung der Kapazität des Interdigitalkondensators bewirken.

Die Bearbeitung der Oberfläche erfolgt vorzugsweise durch das Aufbringen eines Hydrophilierungsmittels zur Erzeugung einer hydrophilen Schicht, welche durch ein Tauch- oder Sprühverfahren auf die Passivierungsschicht aufgebracht wird.

Vorteilhafte Wirkungen sind ein besserer Durchgriff des elektrischen Feldes durch die Betauung, eine Verbesserung der gleichmäßigen Wasserkondensation bei Betauungsbeginn, sowie die Bildung eines geschlossenen Wasserfilms.

Anhand eines Ausführungsbeispieles mit Zeichnung soll die Erfindung näher erläutert werden.

Es zeigt:
- Fig. 1: einen Aufbau eines kapazitiv arbeitenden Sensors mit Interdigitalstruktur,
- Fig. 2: den Sensor aus Fig. 1 mit einem aufgebrachten Hydrophilierungsmittel und
- Fig. 3: eine vergrößerte Darstellung der hydrophilen Schicht aus Fig. 2.

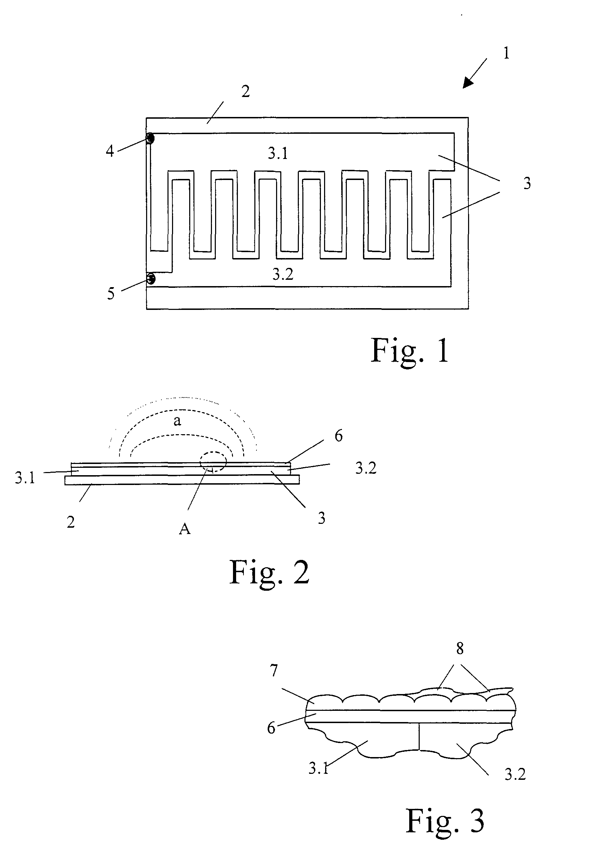

In Fig. 1 ist der Aufbau eines kapazitiv arbeitenden Sensors 1 mit einem Träger 2, auf dem eine Metallschicht 3 mit einer Stärke von ca. 5 µm als Interdigitalstruktur 3.1, 3.2 angebracht ist, dargestellt. Die Interdigitalstruktur 3.1, 3.2 bildet hierbei den Kondensator. Für einen elektrischen Abgriff des Signals des Sensors 1 für eine nicht näher dargestellte Auswerteinheit, weist der Sensor 1 Bondinseln 4,5 als Abgriffstellen am Rand der Interdigitalstruktur 3.1, 3.2 auf.

Auf dieser Metallschicht 3 ist, wie in Fig. 2 dargestellt, eine Passivierungsschicht 6 aufgebracht. Diese Passivierungsschicht 6 ist vorzugsweise als Overglazeschicht (SiOₓ) in Dünnschicht ausgeführt und weist eine Dicke von vorzugsweise ca. 1 µm auf. Durch diese Overglazeschicht 6 wird der Durchgriff der Feldlinien a von einer Interdigitalstrukturhälfte 3.1. auf die andere Interdigitalstrukturhälfte 3.2. realisiert.

Diese Overglazeschicht 6 wird nun zur Erhöhung der Empfindlichkeit des Sensors 1 hydrophil gestaltet, d. h. die Oberflächenenergie der Schicht 6 wird erhöht, indem eine hydrophile Schicht 7 in einer Dicke von ca. 001 um durch Tauchen oder Sprühen aufgebracht wird. Dadurch wird eine Oberfläche mit hoher Hydrophile als Kondensationsfläche geschaffen. Dies ermöglicht eine ganzflächige, geschlossene Belegung der Schicht 7 und damit der Overglazeschicht mit Wassermolekülen der Betauung 8.

Eine solche Schicht 7 ist der Fig. 3 entnehmbar. Diese hydrophile Schicht 7 liegt auf der gesamten Oberfläche der Overglazeschicht 6 auf. Durch die gleichmäßige hydrophile Schicht 7 legt sich eine beginnende Betauung 8 überall auf der Oberfläche, d. h. unabhängig von Kondensationskeimen, gleichmäßig auf, die eine Veränderung der Kapazität des Kondensators bewirkt. Diese Veränderung erfolgt an jeder Stelle auf der Oberfläche der Overglazeschicht 6, an der die Betauung 8 beginnt. Diese Veränderung der Kapazität bewirkt eine Veränderung des Signals an den Abgriffen 4, 5, welches zur Auswertung an die Auswertereinheit gebracht wird .

Das Trägermaterial 2 besteht vorzugsweise aus einem flexiblen Material.

Auch kann, wie im Stand der Technik, eine Widerstandsanordnung auf dem Sensor 1 integriert sein.

## Patentansprüche

1. Kapazitiv arbeitender Sensor zur Detektion von Kondensation an Oberflächen, aufweisend einen Träger mit einer aufgebrachten Metallschicht in Interdigitalstruktur, die die Kapazität des Sensors bildet, sowie einer Passivierungsschicht, **dadurch gekennzeichnet, daß**
- auf der Passivierungsschicht (6) eine hydrophile Schicht (7) durch Tauchen oder Sprühen aufgebracht ist, wodurch die Oberflächenspannung der Passivierungsschicht (6) erhöht wird.

2. Sensor nach Anspruch 1, **dadurch gekennzeichnet, daß** die Passivierungsschicht (6) eine Overglazeschicht ist.

3. Sensor nach Anspruch 2, **dadurch gekennzeichnet, daß** die hydrophile Schicht (7) eine Dicke von 0,01 µm aufweist.

4. Sensor nach Anspruch 1, **dadurch gekennzeichnet, daß** die hydrophile Schicht (7) eine benetzungsfördernde Schicht ist.
